# EUROPÄISCHE PATENTSCHRIFT

(11) **EP 0 619 131 B1**
(45) Veröffentlichungstag und Bekanntmachung des Hinweises auf die Patenterteilung: **04.06.1997**
(21) Anmeldenummer: 94105282.1
(22) Anmeldetag: 05.04.1994
(51) Int. Cl.: B01D 17/025, B01D 17/12, E03F 5/16

(54) **Leichtflüssigkeitsabscheider mit einem selbsttätigen Abschluss**
Light liquid separator with automatic shut-off
Séparateur de liquide léger avec fermeture automatique

(30) Priorität: 08.04.1993 DE 4311719
(43) Veröffentlichungstag der Anmeldung: 12.10.1994
(73) Patentinhaber: DYCKERHOFF & WIDMANN AG, 81902 München (DE)
(72) Erfinder:
(74) Vertreter: Patentanwälte Möll und Bitterich

(56) Entgegenhaltungen:
- EP-A- 0 368 084
- EP-A- 0 387 780
- EP-A- 0 512 157
- DE-A- 2 838 559
- GB-A- 1 535 282

## Beschreibung

Leichtflüssigkeitsabscheider werden überall dort eingesetzt, wo Leichtflüssigkeiten, insbesondere Öl, Benzin oder dergleichen nicht in das öffentliche Kanalnetz eingeleitet werden dürfen. Sie besitzen eine Abscheidekammer, in der die Leichtflüssigkeit von der Schwerflüssigkeit, in der Regel Wasser, getrennt wird, so daß die gereinigte Schwerflüssigkeit über den Auslauf des Abscheiders in das Kanalnetz oder ein offenes Gewässer abgeleitet werden kann. Zur Förderung des Abscheidens können in der Abscheidekammer Koaleszenzelemente vorgesehen sein, in denen die in der Schwerflüssigkeit dispergierte Leichtflüssigkeit Gelegenheit zur Koaleszenz erhält.

Leichtflüssigkeitsabscheider dieser Art besitzen üblicherweise keinen eigenen Ablauf für die Leichtflüssigkeit; die von der Schwerflüssigkeit getrennte Leichtflüssigkeit sammelt sich vielmehr in der Abscheidekammer oberhalb der Schwerflüssigkeit an und wird periodisch oder bei Bedarf von dort abgesaugt bzw. abgepumpt. Damit hierbei die Leichtflüssigkeit, deren Schichtdicke in der Abscheidekammer mit zunehmendem Zufluß immer größer wird, nicht in den zum Kanalnetz führenden Auslauf für die Schwerflüssigkeit gelangen kann, sind derartige Abscheider mit einem selbsttätigen Abschluß versehen. Dieser Abschluß schließt entweder den Zulauf oder den Ablauf, wenn der Spiegel der Schwerflüssigkeit in der Abscheidekammer ein bestimmtes Niveau unterschreitet bzw. die Dicke der Leichtflüssigkeitsschicht eine bestimmte Höhe überschreitet.

Bei einem bekannten Leichtflüssigkeitsabscheider dieser Art verschließt der Abschluß den Ablauf des Abscheiders (EP-B 0 276 861). Der Abschluß besteht aus einer horizontal angeordneten Verschlußklappe, die über eine vertikale Stange mit einem Schwimmer verbunden ist. Der Abschluß befindet sich vor dem als Tauchrohr ausgebildeten Ablaufrohr, das an der Behältersohle einen Rohrstutzen mit einer oberen horizontalen Ablauföffnung für die Schwerflüssigkeit aufweist, die durch die Verschlußklappe wie durch einen Deckel verschließbar ist. Im Betrieb des Abscheiders schwimmt der Schwimmer auf der Schwerflüssigkeit. Sinkt durch zunehmende Ansammlung von Leichtflüssigkeit der Spiegel der Schwerflüssigkeit in der Abscheidekammer ab, so sinken auch der Schwimmer und die mit diesem verbundene Klappe ab, bis sie bei einer bestimmten - einstellbaren - Höhe des Spiegels der Schwerflüssigkeit den Ablauf für die Schwerflüssigkeit verschließt.

Diese Ausbildung eines selbsttätigen Abschlusses weist konstruktionsbedingt eine große Bautiefe auf, die zu einer erheblichen Verringerung der wirksamen Fläche bzw. Höhe des Abscheiders führt. Außerdem kann infolge der konstruktionsbedingten Gestaltung des Abschlusses der Auslaufbereich hydraulisch nicht optimal gestaltet werden. Ein weiterer Nachteil besteht darin, daß sich bei weiterem Zufluß von Leicht-/Schwerflüssigkeitsgemisch die Klappe nicht mehr vom Ablauf abhebt, da die auf der Klappe lastende Schwerflüssigkeitsschicht den Auftrieb des Schwimmers übersteigt. Der Abschluß bleibt somit geschlossen, so daß durch das zufließende Gemisch der Leichtflüssigkeitsspiegel in der Abscheidekammer immer mehr ansteigen kann. Die Leichtflüssigkeit muß dann sofort abgesaugt werden, um den Abscheider wieder betriebsbereit zu machen. In vielen Fällen wird jedoch der richtige Zeitpunkt zum Absaugen versäumt, so daß die Leichtflüssigkeit die Abscheidekammer nach oben hin vollständig ausfüllen und sich einen Weg zum Austritt aus der Kammer suchen kann.

Bei einem anderen Leichtflüssigkeitsabscheider dieser Art wird der Zulauf durch einen Ventildeckel verschlossen, der schwimmergesteuert entweder um eine horizontale Schwenkachse vor die Zulauföffnung schwenkbar oder durch ein parallelogrammartiges Gestänge vor die Zulauföffnung führbar ist (AT 393 670 B). Bei dieser Ausführung besteht die Gefahr, daß durch den hydraulischen Druck des zufließenden Leicht-/Schwerflüssigkeitsgemischs der Abschluß gegen den Auftrieb des Schwimmers geöffnet wird.

Vor diesem Hintergrund liegt der Erfindung die Aufgabe zugrunde, einen Leichtflüssigkeitsabscheider der eingangs angegebenen Art mit einem leicht und zuverlässig funktionierenden selbsttätigen Abschluß auszustatten und zugleich die Fläche bzw. Länge des Abscheiders möglichst vollständig für den Abscheidevorgang nutzen zu können.

Gemäß der Erfindung wird diese Aufgabe durch einen Leichtflüssigkeitsabscheider mit den im kennzeichnenden Teil des Patentanspruchs 1 angegebenen Merkmalen gelöst.

Vorteilhafte Weiterbildungen ergeben sich aus den Unteransprüchen.

Der Grundgedanke der Erfindung liegt darin, als Abschluß eine Drehklappe vorzusehen, die innerhalb eines ohnehin vorhandenen vertikalen Tauchrohrs angeordnet ist und so entweder im Zulauf- oder im Auslaufbereich vorgesehen werden kann. Dadurch kann die Grundfläche des Abscheiders voll für den Abscheidevorgang genutzt und können sowohl der Zulauf-, als auch der Auslaufbereich optimal gestaltet werden.

In den Abscheideraum ragt lediglich das der Betätigung der Drehklappe dienende parallelogrammartige Gestänge hinein, mit dem die Drehklappe drehfest verbunden ist. Im Betriebszustand wird die Differenzkraft zwischen dem Gewicht des Gestänges und der auf dieses wirkenden Auftriebskraft sowie der Auslösekraft durch einen Auslösemechanismus gehalten, der sich oberhalb des Flüssigkeitsspiegels befindet. Erreicht die Leichtflüssigkeitsschicht eine bestimmte Höhe, dann verringert sich durch das geringere spezifische Gewicht der Leichtflüssigkeit die auf das Gestänge wirkende Auftriebskraft, was dazu führt, daß die Haltekraft des Auslösemechanismus überschritten wird und das Gestänge sich absenkt. Durch die potentielle Energie des Gestänges wird die Drehklappe in die Schließstellung geschwenkt. Aufgrund der symmetrischen Ausbildung der Drehklappe entstehen dabei keine nennenswerten Drehwiderstände. Die das Schließen der Drehklappe bewirkende Kraft kann verstärkt werden durch einen an dem Gestänge befestigten Steuerkörper, der zunächst mit Luft gefüllt ist, sich beim Füllen der Abscheidekammer aber selbsttätig mit Schwerflüssigkeit füllt, so daß die spezifisch leichtere Leichtflüssigkeit später nicht in den Körper eindringen kann.

Von besonderem Vorteil ist, daß der erfindungsgemäße Abschluß nicht nur im Auslaufbereich, sondern auch im Zulaufbereich eines Behälters angeordnet werden kann. Bei Anordnung im Zulaufbereich wird, wenn die auf der Schwerflüssigkeit schwimmende Leichtflüssigkeitsschicht eine bestimmte Höhe überschreitet, der Zulauf verschlossen, so daß keine weitere Flüssigkeit mehr in die Abscheidekammer gelangen kann. Es erfolgt dann zwar ein Rückstau von Gemisch im Zulaufbereich; dieser kann jedoch in Kauf genommen werden, da der Zulaufbereich ohnehin mit Leichtflüssigkeit verunreinigt und entsprechend gedichtet ist.

Die Erfindung wird nachstehend anhand eines in der Zeichnung dargestellten Ausführungsbeispiels näher erläutert. Es zeigt
- Fig. 1: einen Vertikalschnitt und
- Fig. 2: einen Horizontalschnitt durch einen Leichtflüssigkeitsabscheider gemäß der Erfindung,
- Fig. 3: eine Darstellung des Zulaufbereichs mit dem selbsttätigen Abschluß in Betriebsstellung im Vertikalschnitt in größerem Maßstab,
- Fig. 4: eine Draufsicht auf die Darstellung der Fig. 3, die
- Fig. 5 und 6: der Fig. 3 entsprechende Darstellungen in Verschluß- bzw. Befüllstellung,
- Fig. 7: eine andere Ausführungsform des selbsttätigen Abschlusses in Betriebsstellung in Seitenansicht,
- Fig. 8: den selbsttätigen Abschluß nach Fig. 7 in Frontansicht sowie die
- Fig. 9 und 10: der Fig. 7 entsprechende Darstellungen in Verschluß- bzw. Befüllstellung.

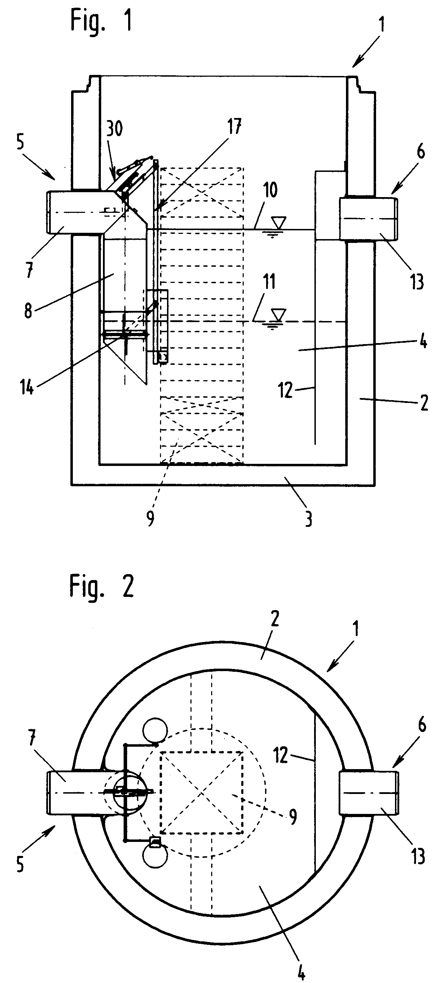

In den Fig. 1 und 2 ist ein Leichtflüssigkeitsabscheider üblicher Bauart im Vertikalschnitt und in Draufsicht dargestellt. Der Leichtflüssigkeitsabscheider besteht aus einem als Stahlbetonfertigbauteil ausgebildeten Behälter 1 mit einer zylindrischen Außenwand 2 und einer Sohle 3, die eine Abscheidekammer 4 bilden. Der Behälter 1 besitzt auf einer Seite einen Zulauf 5 für das Leicht-/Schwerflüssigkeitsgemisch und auf der gegenüberliegenden Seite einen Auslauf 6 für die von der Leichtflüssigkeit befreite Schwerflüssigkeit.

Das Leicht-/Schwerflüssigkeitsgemisch fließt durch ein Zulaufrohr 7, das sich innerhalb des Behälters als vertikales Tauchrohr 8 fortsetzt, in die Abscheidekammer 4 ein. Beim Durchfließen der Abscheidekammer 4 trennt sich die Leichtflüssigkeit von der Schwerflüssigkeit und steigt an die Oberfläche. Die Trennung kann durch Einbau einer - durch gestrichelte Linien angedeuteten - Koaleszenzbarriere 9 intensiviert und beschleunigt werden. Der Flüssigkeitsspiegel der Leichtflüssigkeit ist bei 10 angedeutet, derjenige der Schwerflüssigkeit bei 11. Die am Grunde der Abscheidekammer 4 gesammelte, von der Leichtflüssigkeit befreite Schwerflüssigkeit steigt an der dem Zulauf 5 gegenüberliegenden Seite hinter einer Tauchwand 12 nach oben und wird über ein Auslaufrohr 13 abgezogen.

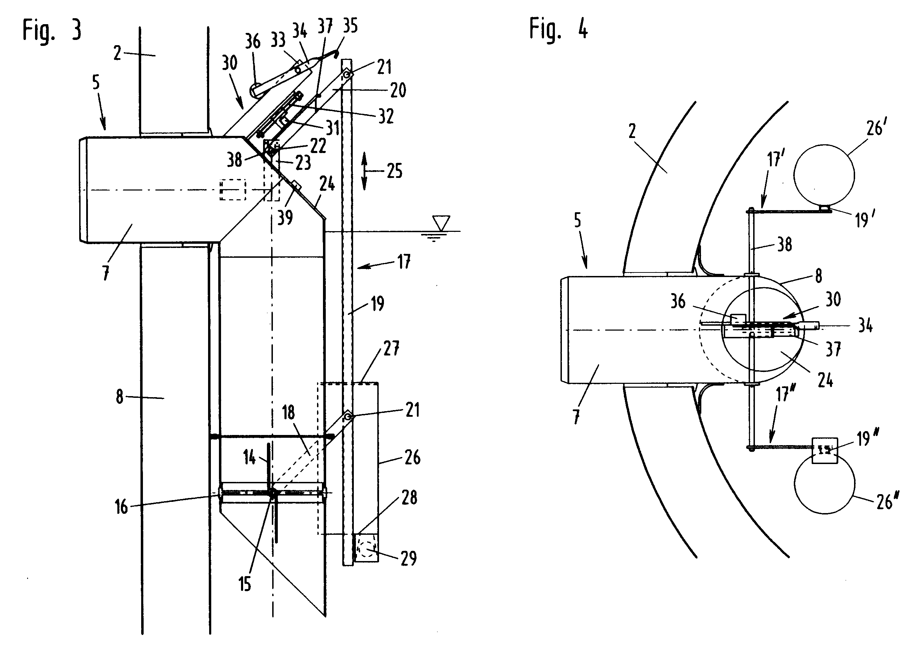

Im dargestellten Ausführungsbeispiel ist der selbsttätige Abschluß im Zulaufbereich, und zwar als Drehklappe 14 innerhalb des Tauchrohrs 8 vorgesehen; er kann anhand der Fig. 3, die als Ausschnitt aus Fig. 1 in größerem Maßstab eine erste Ausführungsform zeigt, näher erläutert werden.

Fig. 3 zeigt den selbsttätigen Abschluß in Betriebsstellung, d.h. mit geöffneter Drehklappe 14. Die Drehklappe 14 ist in dem Tauchrohr 8 um eine Drehachse 15 in einem Stahlring 16 drehbar gelagert. Die Drehklappe 14 ist drehfest mit dem einen Ende eines unteren Stabes 18 eines parallelogrammartigen Gestänges 17 verbunden, das noch einen vertikalen Stab 19 und einen oberen Stab 20 aufweist. Die Stäbe 18, 19 und 20 sind jeweils bei 21 gelenkig miteinander verbunden. Der obere Stab 20 ist an seinem anderen Ende bei 22 in einem Lager 23 gelenkig gelagert, das an einer schrägen Deckplatte 24 an dem Tauchrohr 8 befestigt ist. Durch Auf- oder Abbewegung des Gestänges 17 in Richtung des Doppelpfeils 25, wobei die Stäbe 18 und 19 jeweils um einen Winkel von 90 Grad verschwenkt werden, kann die Drehklappe 14 geöffnet oder geschlossen werden. Wie die Draufsicht gemäß Fig. 4 erkennen läßt, können gleichartige Gestänge 17' und 17'' symmetrisch zu bei den Seiten des Tauchrohrs 8 angeordnet sein.

An dem vertikalen Stab 19 bzw. den Stäben 19', 19'' ist ein Steuerkörper 26 bzw. sind Steuerkörper 26', 26'' befestigt, die im dargestellten Ausführungsbeispiel jeweils aus einem zylindrischen, oben offenen Rohr bestehen. Der Steuerkörper 26 ist an dem Gestänge 17 so angeordnet, daß seine Oberkante 27 im Betriebszustand unterhalb des Flüssigkeitsspiegels 10 liegt; er füllt sich somit bei steigendem Flüssigkeitsniveau von selbst mit Flüssigkeit, und zwar mit Leicht-/Schwerflüssigkeitsgemisch.

Wie Fig. 3 weiterhin zeigt, befindet sich am Boden 28 des Steuerkörpers 26 ein Rückschlagventil 29, das nur ein Entleeren des Steuerkörpers 26 erlaubt. Bei langsamem Steigen des Flüssigkeitsspiegels in der Abscheidekammer 4 bei Inbetriebnahme kann somit zunächst noch keine Flüssigkeit in den Steuerkörper 26 eindringen; in dieser Phase wirkt der Steuerkörper 26 wie ein Schwimmer und hebt das Gestänge 17 an. Das Gestänge 17 kann durch den Steuerkörper 26 nur bis in die dargestellte Lage gehoben werden, in der die Drehklappe 14 geöffnet ist. In diesem Zustand befindet sich die Oberkante 27 des Steuerkörpers 26 unterhalb des Flüssigkeitsspiegels 10, so daß er sich mit Flüssigkeit füllt.

Um das Gestänge 17 im Betriebszustand (Fig. 3) in der dargestellten oberen Lage zu halten, bei der die Drehklappe 14 geöffnet ist, befindet sich oberhalb des Tauchrohres 8 an der Deckplatte 24 ein Auslösemechanismus 30. Bei dem in Fig. 3 dargestellten Ausführungsbeispiel umfaßt dieser Auslösemechanismus 30 einen Dauermagneten 31, der an einer Gewindespindel 32 parallel zu dem oberen Stab 20 längsbeweglich angeordnet ist; die Gewindespindel 32 ist an einem Lagerblech 33 gehalten, das ebenfalls an der Deckplatte 24 befestigt ist. An dem Lagerblech 33 ist weiterhin ein Verriegelungshebel 34 angelenkt, der am vorderen Ende einen Haken 35 und am rückwärtigen Ende ein Gegengewicht 36 trägt.

Sowohl der Auslösemechanismus 30, also der Dauermagnet 31, als auch der Verriegelungshebel 34 mit dem Haken 35 wirken gegen einen Hebel 37, der parallel zu dem oberen Stab 20 des Gestänges 17 oberhalb des Tauchrohres 8 angeordnet und drehfest mit der Welle 38 verbunden ist, die das Gelenk 22 für das Gestänge 17 bildet und die am Ende den oberen Stab 20 bzw. an den Enden die oberen Stäbe 20', 20'' trägt.

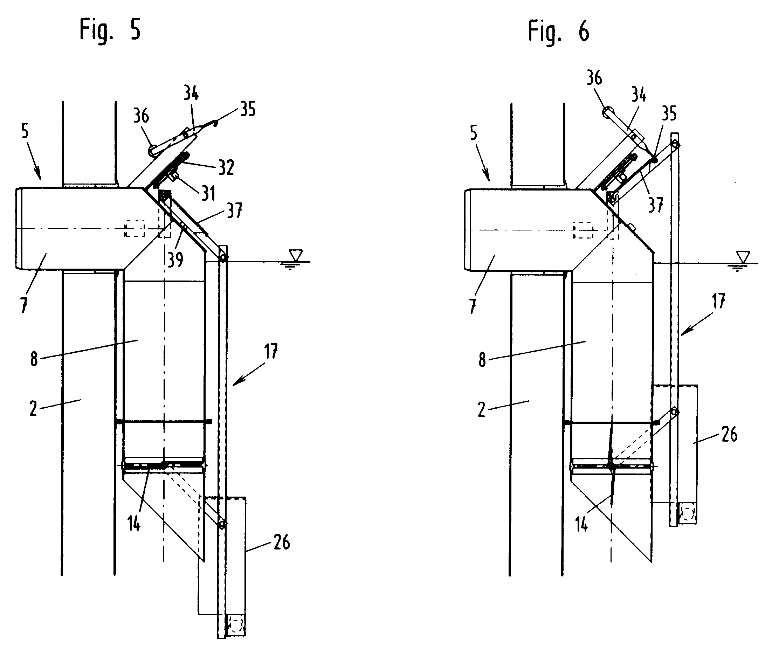

Beim Befüllen des Behälters 1 (Fig. 6) zur Inbetriebnahme bzw. Wiederinbetriebnahme muß die Drehklappe 14 in geöffneter Stellung gehalten werden, um den Zulauf zu ermöglichen. Wenn die magnetische Kraft des Dauermagneten 31 hierzu nicht ausreicht, kann zusätzlich eine mechanische Verriegelung mittels des Verriegelungshebels 34 erfolgen.

Bei geöffneter Drehklappe 14 strömt über das Zulaufrohr 7 Leicht-/Schwerflüssigkeitsgemisch in die Abscheidekammer 4, so daß der Flüssigkeitsspiegel 10 langsam steigt. Dabei genügt allein die Auftriebskraft des mit Luft gefüllten Steuerkörpers, um das System in Betrieb zu nehmen. Sobald der Flüssigkeitsspiegel 10 den oberen Rand 27 des Steuerkörpers 26 erreicht, wird dieser mit Flüssigkeitsgemisch gefüllt. Auf das Gestänge 17, soweit es sich unterhalb des Flüssigkeitsspiegels 10 befindet, und auf den Steuerkörper 26 wirkt nun die Auftriebskraft der Flüssigkeit, die aber nicht ausreicht, um das Gestänge 17 in der oberen Lage zu halten. Deshalb wird die magnetische Kraft des Dauermagneten 31, die über eine Längsverstellung desselben zur Änderung des Hebelarms der angreifenden Kraft genau definiert werden kann, so eingestellt, daß das Differenzgewicht des Gestänges 17 zum Auftrieb in der Schwerflüssigkeit sowie ein bestimmtes Auslösegewicht gerade noch gehalten werden. Ist der Behälter 1 gefüllt, dann muß der Hebel 34 selbstverständlich aus der Verriegelungsstellung gelöst werden. Dies gelingt durch das Gegengewicht 36, das den Hebel 34 in seine Ruhestellung führt, wodurch das System entriegelt wird (Fig. 3).

Die sich bei laufendem Betrieb in der Abscheidekammer 4 oberhalb der Schwerflüssigkeit ansammelnde Leichtflüssigkeit verdrängt im oberen Bereich die Schwerflüssigkeit. Erreicht die Leichtflüssigkeitsschicht mit ihrer Unterkante die Oberkante 27 des Steuerkörpers 26, so kann sie dennoch nicht in deren Hohlraum eindringen, weil dieser mit Schwerflüssigkeit gefüllt ist. Bei weiterer Abscheidung von Leichtflüssigkeit und dementsprechendem Absinken des Schwerflüssigkeitsspiegels 11 verringert sich der auf den Steuerkörper 26 wirkende Auftrieb; es beginnt eine Zusatzkraft auf den Dauermagneten 31 zu wirken, die schließlich zu einem Lösen der durch ihn bewirkten Festhaltung führt. Durch die potentielle Energie des herunterfallenden Gestänges 17 wird nun die Drehklappe 14 geschlossen (Fig. 5). Der Hebel 37 erfährt bei der Abwärtsbewegung des Gestänges 17 einen Anschlag gegen einen Puffer 39.

Nach Absaugen der Leichtflüssigkeit aus der Abscheidekammer 4 und Entfernen des Gemischs aus dem Steuerkörper 26, das durch das Rückschlagventil 29 sehr leicht ausströmen kann, wird das Gestänge 17 manuell gehoben und wieder mittels des Hebels 34 verriegelt. Hierdurch öffnet sich wieder die Drehklappe 14, so daß Flüssigkeitsgemisch zuströmen kann. Sobald dieses den Steuerkörper 26 erreicht, beginnt dieser erneut aufzuschwimmen, bis der Dauermagnet 31 wieder greift und sich der Steuerkörper 26 nicht mehr bewegen kann. Nachdem der Steuerkörper 26 durch das ansteigende Flüssigkeitsgemisch wieder mit Schwerflüssigkeit gefüllt ist, ist das System auslösebereit.

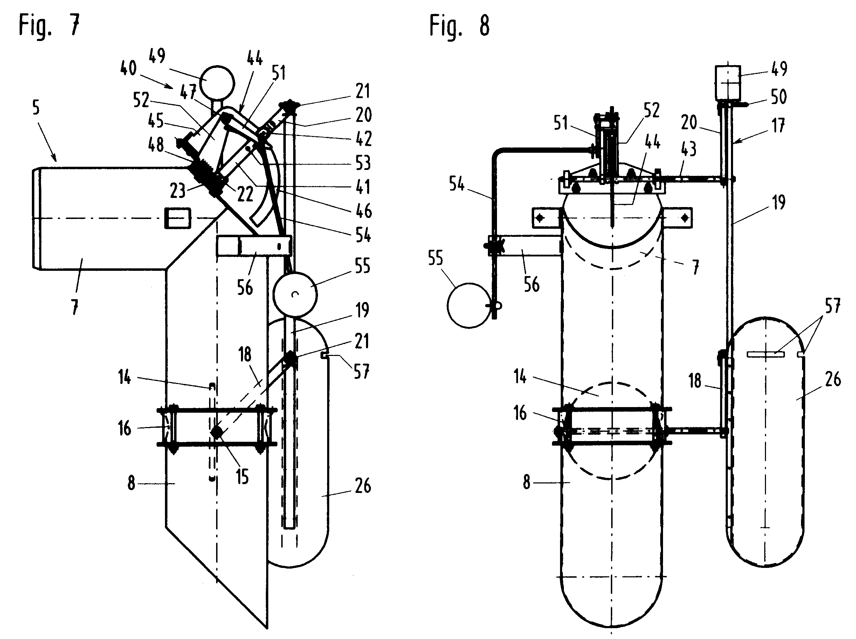

In den Fig. 7 bis 10 ist ein anderes Ausführungsbeispiel des erfindungsgemäßen selbsttätigen Abschlusses dargestellt, das sich von demjenigen nach den Fig. 3 bis 6 im wesentlichen durch die Gestaltung des Auslösemechanismus 40 für die Drehklappe 14 unterscheidet. Demgemäß sind entsprechende Teile des selbsttätigen Abschlusses auch mit den gleichen Bezugszeichen bezeichnet; dies gilt insbesondere für die Drehklappe 14 sowie das parallelogrammartige Gestänge 17 und den Steuerkörper 26. Die unterschiedliche Ausgestaltung des Auslösemechanismus 40 wird nachstehend zunächst anhand der Fig. 7 und 8 erläutert, wobei Fig. 7 eine Seitenansicht und Fig. 8 eine Frontansicht des Zulaufbereichs mit dem selbsttätigen Abschluß zeigen.

Bei dem Auslösemechanismus 40 ist der die Offenhaltung der Drehklappe 14 bewirkende Hebel 37 (Fig. 3) als Rollenklinke 41 ausgebildet, die mit einer Rolle 42 ausgestattet und parallel zu dem oberen Stab 20 des Gestänges 17 drehfest mit der Welle 43 und über diese bewegungsschlüssig mit dem Gestänge 17 verbunden ist. Die Rollenklinke 41 wirkt mit einem Abrollbügel 44 zusammen, der aus einem winkelförmigen Teil 45 und einem gekrümmten Teil 46 besteht; der Abrollbügel 44 ist um eine horizontale Achse 47 schwenkbar gelagert. Der Abrollbügel 41 ist mittels einer mit dem winkelförmigen Teil 47 zusammenwirkenden Zugfeder 48 gegen die Rolle 42 der Rollenklinke anpreßbar. Auf diese Weise kann die Auslösekraft für das die Drehklappe 14 betätigende Gestänge 17 in Abhängigkeit von der Dicke der Leichtflüssigkeitsschicht eingestellt werden.

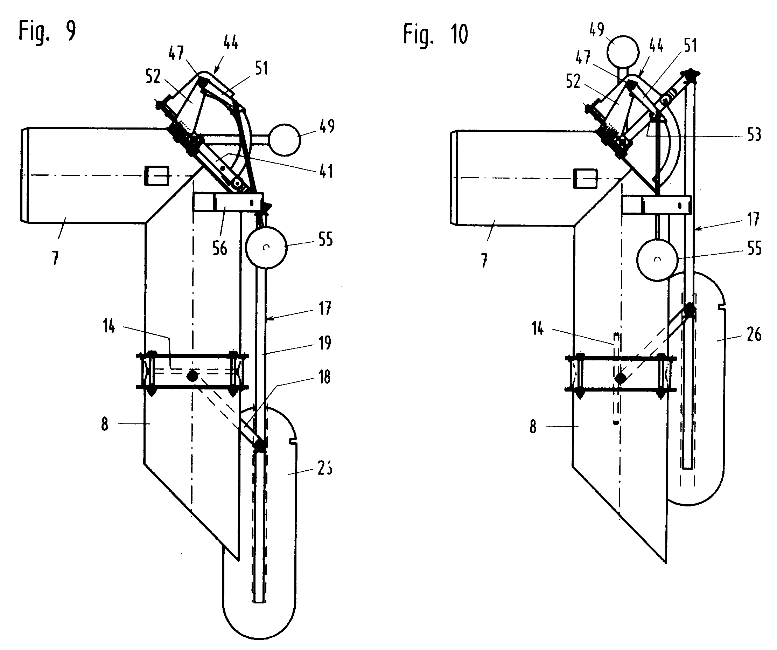

In der in Fig. 7 dargestellten Betriebsstellung wird die Rollenklinke 41 in Wirkverbundung mit dem federbelasteten Abrollbügel 44 durch die nach der jeweiligen Dichte der Leichtflüssigkeit vorgespannte Zugfeder 48 gehalten, bis die maximale Dicke der Leichtflüssigkeitsschicht erreicht ist. Durch den Auftriebsverlust des mit Schwerflüssigkeit gefüllten Steuerkörpers 26, der hier über Öffnungen 57 gefüllt werden kann, wird die Rollenklinke 41 bei einer bestimmten Dicke der Leichtflüssigkeitsschicht aus dem federbelasteten Abrollbügel 44 ausgeklinkt. Bei der Abwärtsbewegung des Gestänges 17, die durch ein Fallgewicht 49 unterstützt werden kann, rollt die Rolle 42 der Rollenklinke 41 auf dem gekrümmten Teil 46 des Abrollbügels 44 ab. Dadurch wird die Drehklappe 14 geschlossen. Die Verschlußstellung zeigt Fig. 9.

Zur Inbetriebnahme oder Wiederinbetriebnahme des Leichtflüssigkeitsabscheiders nach Absaugen oder Abpumpen der Leichtflüssigkeit wird durch manuelle Ausübung einer Zugkraft am Gestänge 17, z.B. über eine Zugvorrichtung 50, das Gestänge 17 nach oben geführt, bis die Rolle 42 wieder in ihre Grundstellung an der Rollenklinke 41 einrastet. Da in diesem Zustand noch der Auftrieb fehlt, ist eine Rückhaltung erforderlich, die über eine Halteklinke 51 bewirkt wird. Die Halteklinke 41 ist, wie der Abrollbügel 44, an einer Lagerkonsole 52 gelagert; sie wirkt mit einem Bolzen 53 an der Rollenklinke 41 zusammen.

Zur selbsttätigen Auslösung ist die Halteklinke 51 über eine Schwimmerstange 54 mit einer Schwimmerkugel 55 verbunden; die Schwimmerstange 54 ist in einer Schwimmerführung 56 geführt. Beim Ansteigen des Flüssigkeitsspiegels im Behälter 1 erhält die Schwimmerkugel 55 oberhalb der Befüllmarke des Steuerkörpers 26 einen Auftrieb, der bis zum Ruhewasserspiegel die Halteklinke 51 vom Bolzen 53 reibungsfrei entkoppelt. Dies wird dadurch erreicht, daß der Auftrieb der Schwimmerkugel 55 erst dann einsetzt, wenn der mit Schwerflüssigkeit gefüllte Steuerkörper 26 keinen Auftriebsverlust mehr erfährt und bereits durch den Auslösemechanismus 40 gehalten wird.

Wird, ohne die Leichtflüssigkeit abgesaugt zu haben, versucht, den selbsttätigen Abschluß wieder in Betrieb zu nehmen, so ist dies nicht möglich, da der Auslösemechanismus 40 infolge des überschrittenen Auftriebsverlustes des Steuerkörpers 26 nicht mehr in die Rastung in dem Abrollbügel 44 eingeklinkt werden kann und die Halteklinke 51 noch immer durch den Auftrieb der Schwimmerkugel 55 entkoppelt ist. Eine Wiederinbetriebnahme des Leichtflüssigkeitsabscheiders ist erst nach Entsorgung der Leichtflüssigkeit möglich.

Der besondere Vorteil dieser Ausführungsform besteht in einer extremen Leichtgängigkeit des Systems. Die Reibung von Rollenklinke 41, Abrollbügel 44, Gestänge 17 und Drehklappe 14 werden durch die Konstruktion weitestgehend minimiert; dadurch wird die Empfindlichkeit des Systems erheblich gesteigert.

## Patentansprüche

1. Leichtflüssigkeitsabscheider mit einem Zulauf (5) für ein Leicht-/Schwerflüssigkeitsgemisch, einer Abscheidekammer (4) zur Trennung des Gemisches und einem Auslauf (6) für die Schwerflüssigkeit, wobei Zu- und/oder Auslauf jeweils ein Tauchrohr (8, 12) aufweisen, sowie mit einem selbsttätigen, durch den Unterschied der spezifischen Gewichte von Schwerflüssigkeit und Leichtflüssigkeit steuerbaren, als Drehklappe (14) ausgebildeten Abschluß, dadurch gekennzeichnet, daß die Drehklappe (14) im Zu- oder Auslauf innerhalb des Tauchrohrs (8) angeordnet und um eine dessen Längsachse rechtwinklig kreuzende Achse (15) schwenkbar ist, daß die Drehklappe (14) mit einem Ende eines unteren Stabes (18) eines parallelogrammartigen Gestänges (17) drehfest verbunden ist, das neben einem mit dem anderen Ende des Stabes (18) gelenkig verbundenen vertikalen Stab (19) einen oberen Stab (20) umfaßt, dessen eines Ende gelenkig mit dem vertikalen Stab (19) und dessen anderes Ende in der Verlängerung der Längsachse des Tauchrohres (8) oberhalb des Leichtflüssigkeitsspiegels (10) an diesem angelenkt ist und daß ein mit dem Gestänge (17) zusammenwirkender, dieses in angehobener und die Drehklappe (14) in geöffneter Stellung haltender Auslösemechanismus (30, 40) vorgesehen ist, der durch eine vom Unterschied der spezifischen Gewichte von Schwerflüssigkeit und Leichtflüssigkeit abhängige Steuerkraft auslösbar ist, so daß sich das Gestänge (17) nach unten bewegt und die Drehklappe (14) geschlossen wird.

2. Leichtflüssigkeitsabscheider nach Anspruch 1, dadurch gekennzeichnet, daß zur Verstärkung der Steuerkraft an dem Gestänge (17) mindestens ein hohler, mit Schwerflüssigkeit füllbarer Steuerkörper (26) angeordnet ist.

3. Leichtflüssigkeitsabscheider nach Anspruch 2, dadurch gekennzeichnet, daß der Steuerkörper (26) an dem vertikalen Stab (19) befestigt ist.

4. Leichtflüssigkeitsabscheider nach Anspruch 2 oder 3, dadurch gekennzeichnet, daß der Steuerkörper (26) aus einem mit seiner Längsachse parallel zu dem vertikalen Stab (19) verlaufenden, zumindest am unteren Ende geschlossenen zylindrischen Rohr besteht, das in seinem oberen Bereich eine Einlauföffnung (27, 57) für die Schwerflüssigkeit aufweist.

5. Leichtflüssigkeitsabscheider nach einem der Ansprüche 2 bis 4, dadurch gekennzeichnet, daß der Steuerkörper (26) an seinem unteren Ende mit einem ein Entleeren des Hohlraums gestattenden Rückschlagventil (29) versehen ist.

6. Leichtflüssigkeitsabscheider nach einem der Ansprüche 1 bis 5, dadurch gekennzeichnet, daß der Auslösemechanismus (30, 40) oberhalb des Leichtflüssigkeitsspiegels (10) angeordnet ist.

7. Leichtflüssigkeitsabscheider nach einem der Ansprüche 1 bis 6, dadurch gekennzeichnet, daß der Auslösemechanismus (30, 40) mit einem mit dem Gestänge (17) bewegungsschlüssig verbundenen Hebel (37, 41) zusammenwirkt.

8. Leichtflüssigkeitsabscheider nach Anspruch 7, dadurch gekennzeichnet, daß der Hebel (37, 41) parallel zu dem oberen Stab (20) des Gestänges (17) angeordnet ist.

9. Leichtflüssigkeitsabscheider nach einem der Ansprüche 1 bis 8, dadurch gekennzeichnet, daß als Auslösemechanismus (30) ein Dauermagnet (31) vorgesehen ist.

10. Leichtflüssigkeitsabscheider nach Anspruch 9, dadurch gekennzeichnet, daß der Dauermagnet (31) parallel zur Erstreckungsrichtung des Hebels (37) verstellbar ist.

11. Leichtflüssigkeitsabscheider nach Anspruch 10, dadurch gekennzeichnet, daß der Dauermagnet (31) an einer drehbaren Gewindespindel (32) gelagert ist.

12. Leichtflüssigkeitsabscheider nach einem der Ansprüche 1 bis 8, dadurch gekennzeichnet, daß als Auslösemechanismus (40) ein Abrollbügel (44) vorgesehen ist, der mit dem als Rollenklinke (41) ausgebildeten Hebel zusammenwirkt, wobei die Rollenklinke (41) eine Rolle (42) aufweist, die am Umfang des gekrümmten Teils (46) des Abrollbügels (44) abrollbar ist.

13. Leichtflüssigkeitsabscheider nach Anspruch 12, dadurch gekennzeichnet, daß der Abrollbügel (44) mittels eines Federelements gegen die Rolle (42) anpreßbar ist.

14. Leichtflüssigkeitsabscheider nach Anspruch 13, dadurch gekennzeichnet, daß als Federelement eine Zugfeder (48) vorgesehen ist.

15. Leichtflüssigkeitsabscheider nach einem der Ansprüche 12 bis 14, dadurch gekennzeichnet, daß zur Verstärkung der Verschlußkraft an dem Gestänge ein Fallgewicht (49) angeordnet ist.

16. Leichtflüssigkeitsabscheider nach einem der Ansprüche 1 bis 15, dadurch gekennzeichnet, daß ein mit dem Hebel (37, 41) zusammenwirkender Verriegelungsmechanismus (34, 35 bzw. 51, 53) für das Gestänge (17) vorgesehen ist.

17. Leichtflüssigkeitsabscheider nach Anspruch 16, dadurch gekennzeichnet, daß der Verriegelungsmechanismus eine mit dem Hebel (41) zusammenwirkende Halteklinke (51) aufweist.

## Claims

1. Light liquid separator with an intake (5) for a light/heavy liquid mixture, a separator chamber (4) for separating the mixture and an outlet (6) for the heavy liquid, wherein the intake and/or outlet comprise(s) an immersion pipe (8, 12), and with an automatic closure (14) which can be controlled by the difference in the relative densities of the heavy liquid and the light liquid and is formed as a pivoted flap, characterised in that the pivoted flap (14) is disposed in the intake or the outlet inside the immersion pipe (8) and can pivot about an axis (15) which intersects the longitudinal axis of the latter at a right angle, that the pivoted flap (14) is connected in a non-rotatable manner to one end of a lower rod (18) of a parallelogram-like linkage (17) which, in addition to a vertical rod (19) flexibly connected to the other end of the rod (18), comprises an upper rod (20), one end of which is flexibly connected to the vertical rod (19) and the other end of which is articulated above the light liquid level (10) to the immersion pipe (8) in the extension of the longitudinal axis of the latter, and that a release mechanism (30, 40) is provided which co-operates with the linkage (17), holds the latter in the raised position and the pivoted flap (14) in the open position and can be released by a control force which is dependent upon the difference in the relative densities of the heavy liquid and the light liquid, so that the linkage (17) moves downwards and the pivoted flap (14) is closed.

2. Light liquid separator according to claim 1, characterised in that at least one hollow control body (26), which can be filled with heavy liquid, is disposed at the linkage (17) to augment the control force.

3. Light liquid separator according to claim 2, characterised in that the control body (26) is fastened to the vertical rod (19).

4. Light liquid separator according to claim 2 or 3, characterised in that the control body (26) consists of a cylindrical pipe whose longitudinal axis extends parallel to the vertical rod (19), which pipe is closed at least at the lower end and comprises in its upper region an inlet opening (27, 57) for the heavy liquid.

5. Light liquid separator according to one of claims 2 to 4, characterised in that the control body (26) is provided at its lower end with a nonreturn valve (29) which allows the hollow space to be emptied.

6. Light liquid separator according to one of claims 1 to 5, characterised in that the release mechanism (30, 40) is disposed above the light liquid level (10).

7. Light liquid separator according to one of claims 1 to 6, characterised in that the release mechanism (30, 40) co-operates with a lever (37, 41) which is connected to the linkage (17) so as to move with it.

8. Light liquid separator according to claim 7, characterised in that the lever (37, 41) is disposed parallel to the upper rod (20) of the linkage (17).

9. Light liquid separator according to one of claims 1 to 8, characterised in that a permanent magnet (31) is provided as the release mechanism (30).

10. Light liquid separator according to claim 9, characterised in that the permanent magnet (31) can be displaced parallel to the direction in which the lever (37) extends.

11. Light liquid separator according to claim 10, characterised in that the permanent magnet (31) is mounted on a rotatable threaded spindle (32).

12. Light liquid separator according to one of claims 1 to 8, characterised in that a roll-over bow (44) is provided as the release mechanism (40), which bow co-operates with the lever formed as a roller pawl (41), the roller pawl (41) comprising a roller (42) which can roll over the circumference of the curved part (46) of the roll-over bow (44).

13. Light liquid separator according to claim 12, characterised in that the roll-over bow (44) can be pressed against the roller (42) by means of a spring element.

14. Light liquid separator according to claim 13, characterised in that a tension spring (48) is provided as the spring element.

15. Light liquid separator according to one of claims 12 to 14, characterised in that a falling weight (49) is disposed at the linkage to augment the closing force.

16. Light liquid separator according to one of claims 1 to 15, characterised in that a locking mechanism (34, 35 or 51, 53), which co-operates with the lever (37, 41), is provided for the linkage (17).

17. Light liquid separator according to claim 16, characterised in that the locking mechanism comprises a holding pawl (51), which co-operates with the lever (41).

## Revendications

1. Séparateur de liquides légers possédant une admission (5) pour un mélange de liquides légers/lourds, une chambre de séparation (4) destinée à séparer le mélange et une évacuation (6) pour le liquide lourd, l'admission et/ou l'évacuation présentant l'une et l'autre un tube plongeur (8, 12), et possédant également une fermeture automatique pouvant être commandée par la différence entre les poids volumiques du liquide lourd et du liquide léger et réalisée sous la forme d'un clapet rotatif (14), caractérisé en ce que le clapet rotatif (14) est agencé dans l'admission ou l'évacuation à l'intérieur du tube plongeur (8) et peut pivoter autour d'un axe (15) qui croise l'axe longitudinal de celui-ci à angle droit, en ce que le clapet rotatif (14) est relié en rotation de manière solidaire à une extrémité d'une tige inférieure (18) d'une tringlerie de type parallélogramme (17) qui comporte, outre une tige verticale (19) reliée de manière articulée à l'autre extrémité de la tige (18), une tige supérieure (20) dont une extrémité est reliée de manière articulée à la tige verticale (19) et dont l'autre extrémité est articulée sur ladite tige au-dessus du niveau du liquide léger (10) dans le prolongement de l'axe longitudinal du tube plongeur (8), et en ce qu'il est prévu un mécanisme de déclenchement (30, 40) concourant avec la tringlerie (17), maintenant celle-ci en position relevée et le clapet rotatif (14) en position ouverte, qui peut être déclenché par une force de commande dépendant de la différence entre les poids volumiques du liquide lourd et du liquide léger, de telle sorte que la tringlerie (17) se déplace vers le bas et que le clapet rotatif (14) se ferme.

2. Séparateur de liquides légers selon la revendication 1, caractérisé en ce que, pour augmenter la force de commande, au moins un élément de commande (26) creux pouvant être rempli avec un liquide lourd est agencé sur la tringlerie (17).

3. Séparateur de liquides légers selon la revendication 2, caractérisé en ce que l'élément de commande (26) est fixé sur la tige verticale (19).

4. Séparateur de liquides légers selon la revendication 2 ou la revendication 3, caractérisé en ce que l'élément de commande (26) se compose d'un tube cylindrique fermé au moins à son extrémité inférieure, ayant son axe longitudinal parallèle à la tige verticale (19) et présentant dans sa partie supérieure une ouverture (27, 57) d'admission du liquide lourd.

5. Séparateur de liquides légers selon l'une quelconque des revendications 2 à 4, caractérisé en ce que l'élément de commande (26) est muni à son extrémité inférieure d'un clapet antiretour (29) permettant de vider la cavité.

6. Séparateur de liquides légers selon l'une quelconque des revendications 1 à 5, caractérisé en ce que le mécanisme de déclenchement (30, 40) est agencé au-dessus du niveau du liquide léger (10).

7. Séparateur de liquides légers selon l'une quelconque des revendications 1 à 6, caractérisé en ce que le mécanisme de déclenchement (30, 40) coopère avec un levier (37, 41) relié à la tringlerie (17) de manière positive.

8. Séparateur de liquides légers selon la revendication 7, caractérisé en ce que le levier (37, 41) est agencé parallèlement à la tige supérieure (20) de la tringlerie (17).

9. Séparateur de liquides légers selon l'une quelconque des revendications 1 à 8, caractérisé en ce qu'un aimant permanent (31) est prévu comme mécanisme de déclenchement (30).

10. Séparateur de liquides légers selon la revendication 9, caractérisé en ce que l'aimant permanent (31) est réglable parallèlement à la direction d'avance du levier (37).

11. Séparateur de liquides légers selon la revendication 10, caractérisé en ce que l'aimant permanent (31) repose sur une tige filetée (32) mobile autour d'un axe.

12. Séparateur de liquides légers selon l'une quelconque des revendications 1 à 8, caractérisé en ce que le mécanisme de déclenchement (40) est un étrier de roulement (44) concourant avec un levier réalisé sous la forme d'un cliquet à galet (41), ledit cliquet à galet (41) présentant un galet (42) pouvant rouler sur le périmètre de la partie curviligne (46) de l'étrier de roulement (44).

13. Séparateur de liquides légers selon la revendication 12, caractérisé en ce que l'étrier de roulement (44) peut être pressé contre le galet (42) au moyen d'un élément à ressort.

14. Séparateur de liquides légers selon la revendication 13, caractérisé en ce qu'un ressort de traction (48) est prévu comme élément à ressort.

15. Séparateur de liquides légers selon l'une quelconque des revendications 12 à 14, caractérisé en ce que, pour augmenter la force de fermeture, un contrepoids (49) est agencé sur la tringlerie.

16. Séparateur de liquides légers selon l'une quelconque des revendications 1 à 15, caractérisé en ce que la tringlerie (17) comporte un mécanisme de verrouillage (34, 35 ou 51, 53) coopérant avec le levier (37, 41).

17. Séparateur de liquides légers selon la revendication 16, caractérisé en ce que le mécanisme de verrouillage présente un loquet de maintien (51) coopérant avec le levier (41).
